# EUROPÄISCHE PATENTANMELDUNG

(11) **EP 1 465 323 A2**
(43) Veröffentlichungstag der Anmeldung: **06.10.2004**
(21) Anmeldenummer: 03020742.7
(22) Anmeldetag: 12.09.2003
(51) Int. Cl.: H02K 7/116

(54) **Motor für eine Motor-Getriebe-Kombination mit reduziertem Bauraumbedarf**

(30) Priorität: 03.03.2003 DE 10309077
(71) Anmelder: ROBERT BOSCH GMBH, 70442 Stuttgart (DE)
(72) Erfinder: Neubauer, Achim, 76547 Sinzheim-Vormberg (DE); Moench, Jochen, 76547 Sinzheim (DE); Dommsch, Hans-Peter, 77830 Buehlertal (DE)

(57) **Zusammenfassung**

Die Erfindung geht von einem Motor (21b) mit einem Stator und einem Rotor (23b) aus, wobei der Rotor (23a; 23b) als Getriebebauteil des Antriebs eines dem Motor (21a; 21b) nachgeordneten Getriebes (24) ausgebildet ist. Es wird vorgeschlagen, den Rotor (23a; 23b) eines Klauenpolmotors als Hohlwelle auszubilden, die das Getriebe (24) aufnimmt.

## Beschreibung

### Stand der Technik

Die Erfindung geht von einem Motor nach dem Oberbegriff des Anspruchs 1 aus.

Grundsätzlich besteht ein Wunsch nach immer leistungsstärkeren und kompakteren Stellantrieben. In der Kraftfahrzeugindustrie werden diese zum Beispiel zum Antrieb von Scheibenwischern, Fensterhebern, Sitzen, Schiebedächern, Luftklappen oder dergleichen eingesetzt. Zum Beispiel werden bei Zweimotoren-Wischanlagen Stellantriebe benötigt, die ein sehr hohes Moment erzeugen und in einem äußerst engem Bauraum untergebracht werden müssen. Ähnlich beengte Bauräume sind meistens auch für den Antrieb von Luftklappen in Kraftfahrzeugen vorgesehen.

Für solche Antriebe werden heute unter Anderem Motoren eingesetzt, wie zum Beispiel Reluktanzmotoren oder Klauenpolmotoren, an deren Rotoren Untersetzungsgetriebe, zum Beispiel Stirnradgetriebe, und/oder Übersetzungsgetriebe angeflanscht werden. Eine solche Konstruktion weist die Nachteile eines großen Bauraumbedarfs und der Notwendigkeit von für die eigentliche Funktion nicht benötigten Bauteilen auf, wie etwa Lagerungen und der Kupplung zwischen Rotor und Getriebe.

### Vorteile der Erfindung

Nach der Erfindung ist der Motor ein Klauenpolmotor, dessen Rotor als Hohlwelle ausgebildet ist, die das Getriebe aufnimmt. Durch eine solche Integration des Getriebes bzw. eines Getriebebauteils im Motor werden weniger Bauteile notwendig, d.h. es ergibt sich ein einfacherer Zusammenbau des aus Motor und Getriebe bestehenden Antriebs und dessen Bauraumbedarf sowie Gewicht nehmen ab. Durch den so erreichten geringen Bauraumbedarf ergeben sich Vorteile bei der Applikation des Stellantriebs sowie bei Transport und Lagerung.

Das dem Motor nachgeordnete Getriebe ist vorzugsweise ein Taumelscheiben-, Zykloiden-, Well- oder Planetengetriebe. Diese integrierbaren Getriebe sind bei einer hohen Untersetzung besonders klein bauend und weisen in der Regel neben einem entsprechenden Wirkungsgrad eine Selbsthemmung auf, so dass zwar vom Antrieb zum Abtrieb ein Drehmoment übertragen werden kann, jedoch nicht in umgekehrter Richtung vom Abtrieb zum Antrieb hin.

Diese Konstruktion von Rotor mit Magneten und Getriebeeingang als ein Bauteil führt, wie oben angegeben, zu einem geringen Bauraumbedarf. Vorteilhafterweise umfasst der Rotor den Exzenter eines dem Motor nachgeordneten Taumelgetriebes, den Wellengenerator eines dem Motor nachgeordneten Wellgetriebes, oder die Eingangswelle eines dem Motor nachgeordneten Planetengetriebes. Somit ist der Exzenter als Getriebebauteil integral mit dem Rotor gebildet. Bei Kunstoffrotoren eignen sich besonders kunststoffgebundene Magnete bzw. SMC-Magnete bei Rotoren aus Metall-Sinterwerkstoffen. Die angegebenen gut innerhalb des Rotors integrierbaren Getriebe liefern hohe Untersetzungen für hohe Positioniergenauigkeiten und hohe Drehmomentanforderungen, zum Beispiel Nennmomente von ca. 40 Ncm und Blockiermomente bis ca. 100 Ncm.

Der Motor nach der Erfindung kann einphasig ausgebildet sein, wenn ein Sensor zur Positionserfassung des Rotors sowie eine Kommutierungselektronik vorgesehen sind, die die Drehrichtung des Rotors abhängig von einer von dem Sensor erfassten Stillstandsposition des Rotors bestimmt.

Unabhängig von der Ausbildung des Rotors als Antrieb eines dem Motor nachgeordneten Getriebes weist ein einphasiger Klauenpolmotor nach einem weiteren Aspekt der Erfindung einen Sensor zur Positionserfassung des Rotors sowie eine Kommutierungselektronik auf, die die Drehrichtung des Rotors abhängig von einer von dem Sensor erfassten Stillstandsposition des Rotors bestimmt.

Durch die einphasige Ausführungsform des Motors wird eine flachere Form und somit ein geringerer Bauraumbedarf erreicht. Durch die Positionserfassung des Rotors sowie die erfindungsgemäße Kommutierungselektronik kann der einphasige Klauenpolmotor nach der Erfindung stets definiert in eine bestimmte Richtung angefahren werden. Bei gleichzeitiger Integration des Getriebes in die Hohlwelle des Rotors ergibt sich eine besonders flache Bauweise.

Zusätzlich zu dem Vorteil des geringen Bauraümbedarfs sowie den Vorteilen bei der Applikation des Stellantriebs und bei Transport und Lagerung ergibt sich eine kostengünstige Fertigbarkeit des Antriebs durch dessen einfache Wicklung, die Möglichkeit der Verwendung von Blechteilen und von Kunststoffgetrieben. Solche Klauenpolmotoren eignen sich insbesondere für kleine Stellantriebe, wie zum Beispiel in Klappenstellern, weil sie sehr flach und mit integriertem Getriebe sehr kompakt sind.

Vorzugsweise sind die Klauen des erfindungsgemäßen einphasigen Klauenpolmotors asymmetrisch. Dadurch kann der Effekt einer nicht idealen Ruhelage verstärkt und damit einfacher in die gewünschte Richtung angefahren werden. Die normalerweise vorgesehene einfache Wicklung des Klauenpolmotors kann gegebenenfalls durch eine bifilare Wicklung ersetzt werden.

Der Motor nach der Erfindung weist weiter vorzugsweise eine die Kommutierungselektronik aufweisende Platine auf, die innerhalb eines Gehäuses des Motors angeordnet ist und einen integrierten Ansteueranschluss umfasst, dessen Eingang an einer Gehäusefläche des Motors angeordnet ist.

Die vorzugsweise in das Motorgehäuse integrierte Steuerungs- oder Kommutierungselektronik kann mit einem ASIC bestückt sein, so dass zum Beispiel für den gesamten Motor nur ein Steckereingang sichtbar ist. Ein weiterer Vorteil ist dann die einfach als Add-On implementierbare LIN- oder CAN-Bus-Fähigkeit der Elektronik.

### Zeichnung

Weitere Vorteile der Erfindung ergeben sich aus der folgenden Zeichnungsbeschreibung. In der Zeichnung sind zwei Ausführungsbeispiele der Erfindung beispielhaft dargestellt. Die Zeichnung, die Beschreibung und die Ansprüche enthalten zahlreiche Merkmale in Kombination oder als bevorzugtes Ausführungsbeispiel der Erfindung bezeichnet. Der Fachmann wird die Merkmale zweckmäßiger Weise auch einzeln betrachten und/oder zur sinnvollen weiteren Kombination zusammenfassen.

Es zeigen:
- Figur 1: einen Querschnitt eines Motors entsprechend einer ersten bevorzugten Ausführungsform der Erfindung;
- Figur 2: einen Querschnitt eines Motors einer zweiten bevorzugten Ausführungsform der Erfindung, d.h. nach einer vorteilhaften Weiterbildung des in der Figur 1 gezeigten Motors; und
- Figur 3: eine herkömmlich ausgebildete Klaue sowie eine nach der Erfindung besonders vorteilhafte ausgebildete Klaue für die in den Figuren 1 und 2 gezeigten Motoren.

### Beschreibung der Ausführungsbeispiele

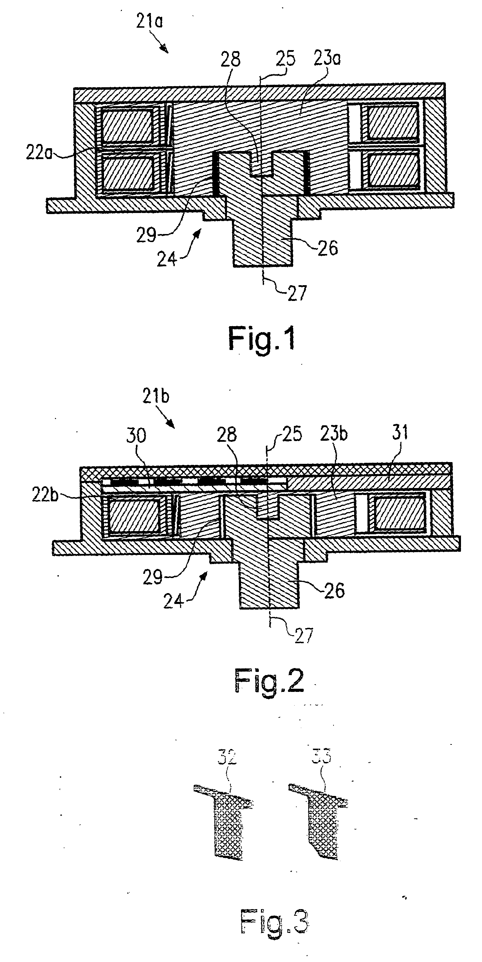

Im Folgenden wird in Bezug auf die Figur 1 ein erster Motor 21a entsprechend der ersten bevorzugten Ausführungsform der Erfindung gezeigt. Der erste Motor 21a ist ein zweiphasiger Klauenpolmotor, der als elektronisch kommutierter Motor als Hohlwellenmotor aufgebaut ist, wobei innerhalb des als Hohlwelle ausgebildeten Rotors ein Getriebe integriert ist. In dem dargestellten Ausführungsbeispiel weist der erste Motor 21a einen Stator 22a mit Gehäusedeckeln und einer Symmetrieachse 25 auf, die mit einer Drehachse 27 eines Abtriebs 26 zusammenfällt. Innerhalb des Stators 22a ist ein Rotor 23a vorgesehen, der sich ebenfalls um die Symmetrieachse 25 des Stators 22a dreht. Der Rotor 23a weist einen Getriebeeingang 28 auf, der in den Abtrieb 26 eingreift. Bei dem gezeigten Beispiel ist ein Wellgetriebe vorgesehen, bei dem eine Circular Spline 29 fest mit dem Stator verbunden ist, der. Getriebeeingang 28 als Wave-Generator ausgebildet ist, und die (nicht gezeigte) Flex Spline fest mit dem Abtrieb 26 verbunden ist.

Wellgetriebe sind neben Taumelscheiben- und Planetengetrieben aufgrund ihrer hohen Untersetzungen besonders geeignet, die hohen Drehmomentanforderungen zu erfüllen, zum Beispiel Nennmomente im Bereich von 40 Ncm und Blockiermomenten bis zu 100 Ncm, und gleichzeitig die geringen Stellgenauigkeit des Motors in eine geforderte hohen Positioniergenauigkeit umzusetzen.

Der Rotor 23a mit Magneten und Getriebeeingang lässt sich als ein Bauteil konstruieren. Dabei eignen sich besonders kunststoffgebundene Magnete bei Kunststoffrotoren bzw. SMC-Magnete bei Rotoren aus Metall-Sinterwerkstoffen. Neben dem Wellengenerator bei Wellgetrieben kann als Getriebeeingang der Exzenter bei Taumelgetrieben oder die Eingangswelle eines Planetengetriebes direkt mit ausgebildet werden.

Die gezeigte aus Motor und Getriebe bestehende Einheit kann vorzugsweise für den Antrieb von Luftklappen vorgesehen werden, der außerhalb eines Luftkanals angebracht wird und mittels des zum Beispiel als Sechskantwelle ausgebildeten Abtriebs 26 die Luftklappe z.B. über einen Hebel verstellt. Der Stator kann auch aus mehr als zwei Wicklungen bestehen. Das verwendete Getriebe 24 besitzt zum Beispiel eine Untersetzung im Bereich von 250:1 bis 400:1.

Bei dem gezeigten Wellgetriebe ist der Rotor 23a auf der dem Abtrieb 26 abgekehrten Seite im Gehäuse gelagert und treibt den Wellengenerator 28 an. Das außen liegende Hohlrad, d.h. die Circular Spline 29, des Wellgetriebes ist am Motorgehäuse fixiert und der Abtrieb erfolgt über das Stirnrad, d.h. die im Abtrieb 26 integrierte Flex Spline, dessen Lagerung auch die der Abtriebswelle darstellt.

Hierdurch wird bei geringer Bauhöhe und geringem Durchmesser ein Getriebe in den Rotor bzw. die Hohlwelle des Motors integriert.

In Bezug auf die Figuren 2 und 3 wird im Folgenden ein zweiter Motor 21b entsprechend der zweiten bevorzugten Ausführungsform der Erfindung als eine vorteilhafte Weiterentwicklung der ersten bevorzugten Ausführungsform der Erfindung beschrieben. Das charakteristische Merkmal der zweiten bevorzugten Ausführungsform der Erfindung ist die Ausgestaltung als einphasiger Klauenpolmotor, die auch unabhängig von der Ausgestaltung des Rotors als Getriebeeingang zur Erzielung einer flachen Bauform führt.

Der im Bezug auf die Figur 1 beschriebene erste Motor 21a entsprechend der ersten bevorzugten Ausführungsform der Erfindung ist zur Minimierung der Momentenwelligkeit und zur Gewährleistung eines problemlosen Anfahrens in beide Drehrichtungen wenigstens zweiphasig konzipiert. Der im Folgenden beschriebene zweite Motor 21b entsprechend der zweiten bevorzugten Ausführungsform der Erfindung ist als einphasiger Klauenpolmotor ausgelegt, der flacher als herkömmliche zwei- oder mehrphasige Varianten ist. Aufgrund eines integrierten Positionssensors für die Rotorposition, mit dessen Ausgangssignal eine integrierte Steuerungs- oder Kommentierungselektronik 30 versorgt wird, ist der zweite Motor 21b trotzdem eindeutig in zwei Drehrichtungen anfahrbar. Der Sensor für die Positionserfassung des Rotors kann zum Beispiel ein Hall-, AMR- oder kapazitiver Sensor sein.

Allgemein ist der Klauenpolmotor 21b mehrpolig, d.h. er hat zum Beispiel 4, 6, 8 etc. magnetische Pole auf dem Umfang verteilt, zum Beispiel kunststoffgebundene Magnete. Die Klauen sind im Stillstand ohne Strom so gegenüber den magnetischen Polen angeordnet, dass der Übergang von einem zum nächsten magnetischen Pol genau auf Höhe der ebenen seitlichen Begrenzung einer Klaue liegt. Durch die Momentenwelligkeit dieses einphasigen Klauenpolmotors 21b kommt so der Motor bei Unterbrechung/Abschalten der Bestromung stets auch in einer solchen Stellung wieder zum Stillstand. Durch den in der Wicklung fließenden tangentialen Gleichstrom entsteht in der Hülse sowie in den jeweiligen Klauen eine homopolare Ausrichtung des Magnetfeldes, d.h. jede Klaue besitzt eine einzige magnetische Polarität. Die tatsächliche Ruhelage der Pole gegenüber den Klauen ist nie ideal und von Mal zu Mal nicht exakt identisch. Dieser Effekt wird nach der Erfindung ausgenutzt, indem zum Anfahren über die Positionssensorik zuerst die exakte Position des Rotors bestimmt wird und ausgehend von dieser Messung und der gewünschten Drehrichtung die Spulen genau so bestromt werden, dass die Klauen eine solche Polarität aufweisen, dass der Motor in die richtige Drehrichtung anläuft. Damit ist die Drehrichtung aus dem Stillstand vorgebbar. Hat sich der Motor auf diese Weise um eine Polteilung weitergedreht, so wird der Strom in Ständerspule kommutiert, um die Richtung des erzeugten Momentes nicht umzukehren. Diese Kommutierung wird durch die Steuerungs- oder Kommutierungselektronik 30 realisiert, die auch das Anfahren übernimmt. Der Motor kann so Polteilung um Polteilung, also Schritt um Schritt gedreht bzw. betrieben werden. Die Stellgenauigkeit eines solchen einphasigen Klauenpolmotors 21b ist nur von der Zahl der magnetischen Pole abhängig; je höher diese Zahl ist, desto genauer kann man ihn stellen. Gegebenenfalls kann die einfache Wicklung auch durch eine bifilare Wicklung ersetzt werden.

Normalerweise werden für einen Klauenpolmotor symmetrische Klauen 32 verwendet, von denen eine in der Figur 3 gezeigt ist. Gestaltet man die Klauen gezielt asymmetrisch, zum Beispiel wie die in der Figur 3 gezeigte Klaue 33, so kann der Effekt der nicht idealen Ruhelage verstärkt und damit einfacher in die gewünschte Richtung angefahren werden.

Der in der Figur 2 gezeigte zweite Motor 21b ist bis auf seine einphasige Ausgestaltung grundsätzlich gleich zu dem in der Figur 1 gezeigten zweiphasigen Klauenmotor, d.h. er besitzt einen einphasigen Stator 22b mit Gehäusedeckeln und einen auf den einphasigen Stator 22b abgestimmten Rotor 23b. Der in der Figur 2 gezeigte zweite Motor 23b weist ebenfalls das in der Figur 1 gezeigte Getriebe 24 auf, welches zum Beispiel bei Abstimmung auf die Momentenanforderungen von Umluft- und Mischluftklappen einen Außendurchmesser von ca. 12 bis 25 mm aufweist. Ein auf diese Anforderungen abgestimmtes Planetengetriebe hat allgemein einen etwas kleineren Außendurchmesser.

Durch die einphasige Konstruktion des Klauenpolmotors und gleichzeitige Integration des Getriebes in den Rotor kann die Steuerungs- oder Kommutierungselektronik 30 stärker als üblich in das Motorgehäuse integriert werden. Die Bestromung der Wicklung geschieht zentrisch aus der Hohlwelle. Die die Steuerungs- oder Kommutierungselektronik 30 enthaltende Platine ist innerhalb des Motorgehäuses auf den Stator 22b aufgesetzt, d.h. zwischen dem Stator 22b und einem Gehäusedeckel angeordnet, und weist die einzelnen Elektronikbauteile und einen integrierten Anschluss 31 auf, z.B. eine Buchse oder einen Stecker, dessen Eingang an einer der Gehäuseflächen z.B. bundig angeordnet ist. Die Elektronik ist durch die entsprechende Bestückung (ASIC) LIN- oder, falls gewünscht, CAN-Bus-fähig. Die aktuelle Position des Rotors wird aus der Schrittzahl und durch weitere zur Verfügung stehende Motordaten sowie aus der Information eines Positionssensors errechnet, der zum Beispiel als eines der Elektronikbauteile der Platine fest über dem rotierenden Rotor mit den kunststoffgebundenen Magneten angebracht ist.

Vorteil dieses hoch integrierten Gesamtkonzepts, hier am Beispiel eines Klappenstellantriebs, ist die kostengünstige Fertigung des Antriebs, d.h. einfache Wicklung, Blechteile, Getriebe in Kunststoff, die flache Bauweise, sowie die einfach als Add-On implementierbare LIN- oder CAN-Busfähigkeit der Elektronik. Durch den geringen Bauraumbedarf ergeben sich zudem wiederum Vorteile bei der Applikation des Stellantriebs sowie bei Transport und Lagerung.

## Patentansprüche

1. Motor (21a; 21b), mit einem Stator (22a; 22b) und einem Rotor (23a; 23b), wobei der Rotor (23a; 23b) als Getriebebauteil eines dem Motor (21a; 21b) nachgeordneten Getriebes (24) ausgebildet ist, **dadurch gekennzeichnet, dass** der Motor (21a; 21b) ein Klauenpolmotor ist, dessen Rotor (23a; 23b) als Hohlwelle ausgebildet ist, die das Getriebe (24) aufnimmt.

2. Motor (21a; 21b) nach Anspruch 1, **dadurch gekennzeichnet, dass** das Getriebe ein Taumelscheiben-, Zykloiden-, Well- (24), oder Planetengetriebe ist.

3. Motor nach Anspruch 1 oder 2, **dadurch gekennzeichnet, dass** der Rotor (23a; 23b) ein Kunststoffrotor mit kunststoffgebundenen Magneten oder ein aus Metall-Sinterwerkstoffen bestehender Rotor (23a; 23b) mit SMC-Magneten ist.

4. Motor nach einem der vorstehenden Ansprüche, **dadurch gekennzeichnet, dass** der Rotor (23a; 23b) den Exzenter eines dem Motor nachgeordneten Taumelgetriebes, den Wellengenerator (28) eines dem Motor nachgeordneten Wellgetriebes (24), oder die Eingangswelle eines dem Motor nachgeordneten Planetengetriebes umfasst.

5. Motor nach einem der vorstehenden Ansprüche, **dadurch gekennzeichnet, dass** der Motor (21b) einphasig ist und einen Sensor zur Positionserfassung des Rotors (23b) sowie eine Kommutierungselektronik (29) aufweist, die die Drehrichtung des Rotors (23b) abhängig von einer von dem Sensor erfassten Stillstandsposition des Rotors (23b) bestimmt.

6. Motor nach nach Anspruch 5, **gekennzeichnet durch** asymmetrische Klauen (31).

7. Motor (21b) nach Anspruch 5 oder 6, **gekennzeichnet durch** eine einfache oder eine bifilare Wicklung.

8. Motor nach einem der vorstehenden Ansprüche, **gekennzeichnet durch** eine die Kommutierungselektronik (30) aufweisende Platine, die innerhalb eines Gehäuses des Motors (21b) angeordnet ist und einen integrierten Ansteueranschluss umfasst, dessen Eingang an einer Gehäusefläche des Motors (21b) angeordnet ist.

9. Motor (1) nach Anspruch 8, **dadurch gekennzeichnet, dass** die in das Motorgehäuse integrierte Steuerungs- oder Kommutierungselektronik mit einem ASIC bestückt ist, so dass für den gesamten Motor nur ein Steckereingang sichtbar ist.
